# FASCICULE DE BREVET EUROPEEN

(11) **EP 0 591 075 B1**
(45) Date de publication et mention de la délivrance du brevet: **04.12.1996**
(21) Numéro de dépôt: 93420385.2
(22) Date de dépôt: 24.09.1993
(51) Int. Cl.: H02H 3/00

(54) **Déclencheur électronique pour disjoncteur basse tension**
Elektronischer Auslöser für Niederspannungsschutzschalter
Electronic trip device for low voltage circuit breaker

(30) Priorité: 29.09.1992 FR 9211731
(43) Date de publication de la demande: 06.04.1994
(73) Titulaire: SCHNEIDER ELECTRIC SA, 92100 Boulogne Billancourt (FR)
(72) Inventeur: Jolliot, Pascal, F-38050 Grenoble Cédex 09 (FR); Nereau, Jean-Pierre, F-38050 Grenoble Cédex 09 (FR); Nebon, Jean-Pierre, F-38950 St Martin Le Vinoux (FR)
(74) Mandataire: Hecké, Gérard

(56) Documents cités:
- EP-A- 0 446 951
- US-A- 4 722 059
- US-A- 4 866 557

## Description

L'invention est relative à un déclencheur électronique pour disjoncteur multipolaire basse tension, comportant des transformateurs de mesure de courant parcourant des conducteurs de phase et de neutre du réseau protégé par le disjoncteur, une résistance connectée aux bornes de chaque transformateur pour engendrer un signal de tension proportionnel au courant dans le conducteur associé, une unité de traitement desdits signaux, qui émet un ordre de déclenchement du disjoncteur lorsque lesdits signaux dépassent des seuils prédéterminés.

Le développement des déclencheurs électroniques, notamment numériques, a permis une standardisation, les larges possibilités de réglage offertes par l'électronique permettant une adaptation aux différents types de protection recherchés. La présente invention a pour but d'accroître cette standardisation, en offrant différentes possibilités de protection du conducteur neutre. On a déjà proposé dans EP-A-0 446 951 un déclencheur électronique avec un amplificateur pour amplifier un signal représentatif du courant dans le conducteur de neutre, le facteur d'amplification pouvant être sélectionné au moyen d'une résistance variable entre les valeurs 1 et 2, notamment pour mieux protéger le conducteur de neutre que les conducteurs de phase. La règlementation ou la coutume de protection du neutre varie d'un pays à l'autre et il est possible de distinguer trois grandes familles, en l'occurrence les installations où le neutre est protégé de la même manière que les phases, les installations où le neutre n'est pas protégé du tout, et les installations où le neutre est protégé à moitié de la protection des phases.

Le déclencheur selon l'invention répond à ces trois types de protection du neutre, et il est caractérisé en ce que les transformateurs de mesure sont tous identiques, que les résistances associées aux transformateurs des conducteurs de phase sont toutes identiques et que le transformateur du conducteur du neutre est associé à un commutateur de sélection d'une résistance nulle, d'une résistance égale à celle des transformateurs de phase ou d'une résistance double de celle des transformateurs de phase.

Les avantages d'utilisation de composants standard, en l'occurrence de transformateurs de courant et de résistances identiques sont conservés et l'adaptation du déclencheur au type de protection de neutre est obtenu par un simple commutateur. La personnalisation du déclencheur peut être faite lors de l'installation ou éventuellement par le distributeur, ce qui limite les stocks et les coûts de fabrication.

Selon un développement de l'invention, la résistance connectée aux bornes du transformateur de neutre est constituée par deux résistances identiques à celles des résistances de phase, connectées électriquement en série. Le commutateur de sélection comporte trois plots, un premier plot ouvert, un deuxième plot de shuntage de l'une des deux résistances, et un troisième plot de shuntage des deux résistances en série. Dans cette dernière position du court-circuitage du transformateur du courant, le signal de tension fourni à l'unité de traitement est nul, et le conducteur de neutre n'est donc pas protégé. Dans la deuxième position, le transformateur de neutre débite sur une seule résistance identique à celles des résistances des transformateurs de phase et le conducteur de neutre est donc protégé de la même manière que les conducteurs de phase. Dans la première position, le transformateur de neutre débite sur les deux résistances en série, et le signal de tension est double de celui des signaux de phase, c'est à dire que le conducteur de neutre est mieux protégé que les conducteurs de phase.

Les transformateurs de courant et les résistances associées sont de préférence intégrés dans un bloc interchangeable pouvant être incorporé ou associé au bloc disjoncteur, et le commutateur de neutre est disposé au droit du transformateur de neutre. L'unité de traitement ou d'autres composants peuvent d'une manière bien connue, être incorporés à ce bloc et un indicateur de position du commutateur de neutre est prévu sur la face externe du bloc pour permettre un contrôle du type de protection retenue.

D'autres avantages et caractéristiques ressortiront plus clairement, de la description qui va suivre, d'un mode de mise en oeuvre de l'invention, donné à titre d'exemple non limitatif et représenté aux dessins annexés dans lesquels:

La figure 1 représente le schéma électrique du bloc déclencheur selon l'invention.

La figure 2 est une vue en perspective du bloc déclencheur selon la figure 1.

Sur les figures, un déclencheur électronique de commande de déclenchement d'un disjoncteur de protection d'une ligne électrique à trois conducteurs de phase 1,2,3 et un conducteur de neutre N lors d'une surcharge, d'un court-circuit ou d'un défaut à la terre, comporte quatre transformateurs de courant identiques 10,11,12,13, chacun associé à l'un des conducteurs 1,2,3,N. Les conducteurs de phase 1,2,3 constituent chacun l'enroulement primaire d'un transformateur de courant associé 10,11,12, et aux bornes de l'enroulement secondaire de ces transformateurs de courant de phase 10,11,12 est connectée une résistance 14,15,16. Le conducteur de neutre N constitue l'enroulement primaire du transformateur de neutre 13 et aux bornes de l'enroulement secondaire de ce transformateur de neutre sont connectées en série deux résistances de neutre 17,18. Chaque transformateur de courant 10-13 engendre dans le circuit secondaire un courant proportionnel au courant parcourant le conducteur associé 1,2,3,N. Ce courant engendre aux bornes de la résistance 14-18 associée, un signal de tension proportionnel au courant parcourant les conducteurs 1,2,3,N et appliqué à une unité de traitement 19. L'unité de traitement 19 qui peut être du type analogique ou numérique assure d'une manière bien connue le déclenchement du disjoncteur, en émettant à la sortie 20 un ordre de déclenchement en cas de surcharge, de court-circuit ou de défaut à la terre. Les trois conducteurs de phase 1,2,3 sont traités de la même manière et à cet effet, les transformateurs de courant 10,11,12, et les résistances de phase 14,15,16 sont identiques, et l'unité de traitement envoie un ordre de déclenchement lorsque la valeur du courant dans l'un quelconque des trois conducteurs de phases 1,2,3 dépasse un seuil prédéterminé.

Un tel déclencheur électronique est bien connu du spécialiste et il est inutile de le décrire plus en détail.

Le transformateur de courant 13 du conducteur de neutre est identique aux transformateurs de phase 10,11,12, mais aux bornes de son circuit secondaire sont connectées d'une part, les deux résistances de neutre 17,18 en série, et un commutateur 21. Le commutateur de neutre 21 comporte une entrée 22 reliée à l'une des bornes 23 de l'enroulement secondaire du transformateur de neutre 13 et trois plots, en l'occurrence un premier plot 24 ouvert, un deuxième plot 25 connecté au milieu 26 des deux résistances de neutre 17,18, et un troisième plot 27 relié à la borne opposée 28 de l'enroulement secondaire du transformateur de neutre 13.

Le commutateur de neutre 21 fonctionne de la manière suivante :

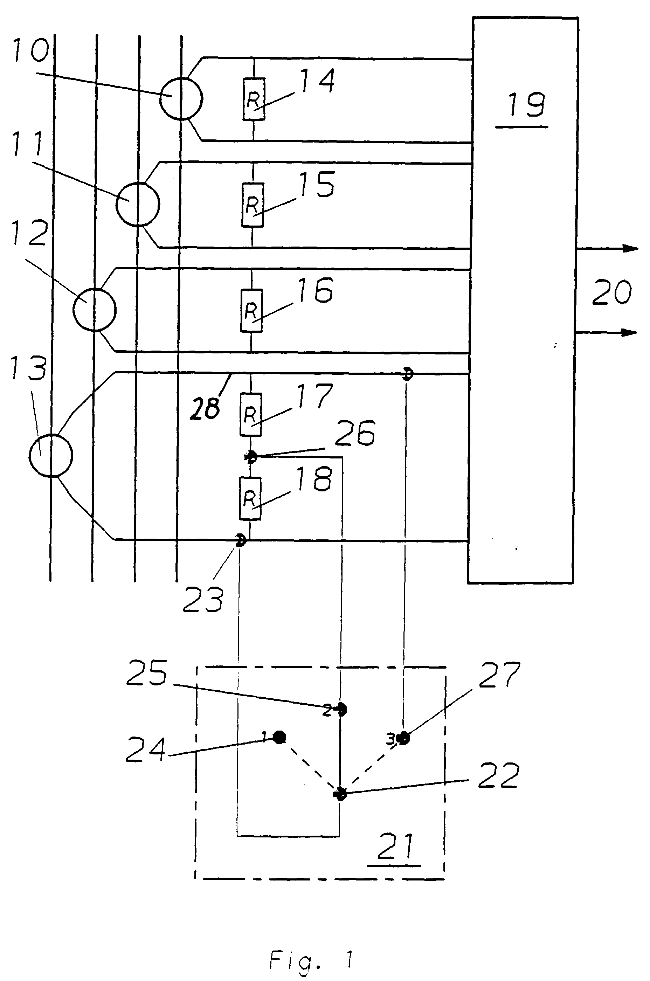

Dans la position milieu représentée sur la figure 1, le commutateur 21 est fermé sur le deuxième plot 25 et court-circuite la résistance de neutre 18. L'enroulement secondaire du transformateur de neutre 13 débite sur une seule résistance de neutre 17 et comme ces résistances de neutre 17 et 18 sont identiques aux résistances de phase 14,15,16, on comprend que le conducteur de neutre N est protégé de la même manière que les conducteurs de phase 1,2,3. Dans la troisième position du commutateur 21, au contact du troisième plot 27, l'enroulement secondaire du transformateur de neutre 13 est court-circuité par ce commutateur 21, et aucun signal n'est transmis à l'unité de traitement 19. Le conducteur de neutre N n'est pas protégé.

Dans la première position, contact avec le premier plot 24, le commutateur de neutre 21 est hors circuit et l'enroulement secondaire du transformateur de terre 13 débite sur les deux résistances de neutre 17,18 en série, en engendrant un signal de tension aux bornes de ces résistances 17,18, double de celui engendré aux bornes de l'une seule de ces résistances. On comprend que le seuil de déclenchement est atteint pour un courant parcourant le conducteur de neutre N deux fois moindre que celui d'un courant d'un conducteur de phase 1,2,3. La section du conducteur de neutre N peut donc être la moitié de celles des conducteurs de phase 1,2,3.

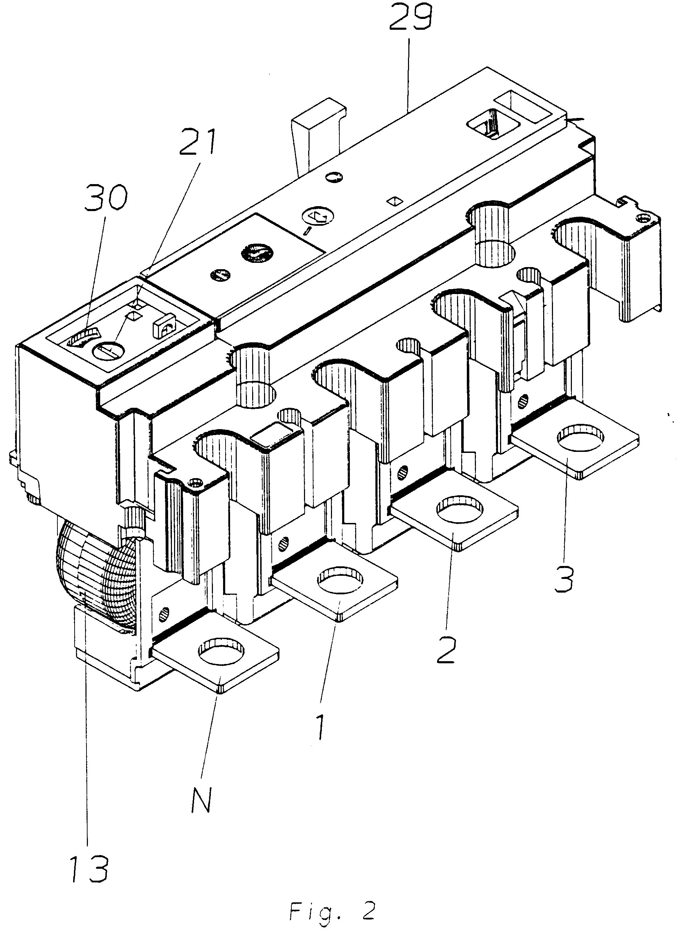

La figure 2 est une vue schématique d'un bloc déclencheur selon l'invention, ayant des transformateurs de courant 13 en forme de tore, traversés par les conducteurs de phase et de neutre 1,2,3,N qui constituent l'enroulement primaire des transformateurs. Le bloc 29 en matière plastique moulé peut être accolé ou incorporé au boîtier moulé du disjoncteur (non représenté), et la face avant porte en regard du transformateur de neutre 13 le bouton de réglage du commutateur 21 ainsi qu'une fenêtre 30 d'indication de la position du commutateur 21. Les résistances 14-18 sont incorporées au bloc 29, qui le cas échéant peut également contenir l'unité de traitement 19 du déclencheur électronique. Le déclencheur peut facilement être adapté à l'installation protégée en actionnant le commutateur 21 pour obtenir la protection de neutre nécessaire.

L'invention est bien entendu nullement limitée au mode de mise en oeuvre plus particulièrement décrit.

## Revendications

1. Déclencheur électronique pour disjoncteur multipolaire basse tension, comportant des transformateurs (10-13) de mesure de courant parcourant des conducteurs de phase (1,2,3) et de neutre (N) du réseau protégé par le disjoncteur, une résistance (14-18) connectée aux bornes de chaque transformateur pour engendrer un signal de tension proportionnel au courant dans le conducteur associé, une unité de traitement (19) desdits signaux, qui émet un ordre de déclenchement du disjoncteur lorsque lesdits signaux dépassent des seuils prédéterminés, caractérisé en ce que les transformateurs (10-13) de mesure sont tous identiques, que les résistances (14-16) associées aux transformateurs des conducteurs de phase (10-12) sont toutes, identiques et que le transformateur du conducteur du neutre (13) est associé à un commutateur (21) de sélection d'une résistance nulle, d'une résistance égale à celle des transformateurs de phase ou d'une résistance double de celle des transformateurs de phase.

2. Déclencheur électrique selon la revendication 1, caractérisé en ce qu'aux bornes du transformateur de neutre (13) sont connectées des résistances (17,18) en série chacune identique aux résistances (14,16) des transformateurs de phase (10-12), et que le commutateur (21) de sélection présente trois positions, une première position ouvert, une deuxième position (25) de shuntage de l'une (18) des deux résistances (17,18) en série, et une troisième position (27) de shuntage des deux résistances en série.

3. Déclencheur électrique selon la revendication 1 ou 2, caractérisé en ce qu'il comporte un bloc interchangeable (29), dans lequel sont intégrés les transformateurs de courant (10-13), lesdites résistances (14-18) et ledit commutateur (21).

4. Déclencheur électrique selon la revendication 3, caractérisé en ce que ledit commutateur (21) est disposé au droit du pôle de protection du conducteur de neutre (N)

5. Déclencheur électrique selon la revendication 3 ou 4, caractérisé en ce que ledit commutateur (21) comprend un indicateur de position (30) sur l'extérieur dudit bloc (29).

## Patentansprüche

1. Elektronischer Auslöser für einen Mehrpol-Niederspannungs-Leistungsschalter mit Stromwandlern (10-13) zur Messung des die Phasenleiter (1, 2, 3) und den Neutralleiter (N) des durch den Leistungsschalter geschützten Netzes durchfließenden Stroms, einem an die Klemmen jedes Stromwandlers angeschlossenen Widerstand (14-18) zur Erzeugung eines dem Strom im zugeordneten Leiter proportionalen Spannungssignals und einer Schaltung (19) zur Verarbeitung der genannten Signale, welche einen Befehl zur Auslösung des Leistungsschalters aussendet, wenn die genannten Signale bestimmte Schwellwerte überschreiten, dadurch gekennzeichnet, daß sämtliche Meßstromwandler (10-13) identisch ausgeführt sind, daß sämtliche, den Phasenleiter-Stromwandlern (10-12) zugeordnete Widerstände (14-16) identisch sind und daß der Neutralleiter-Stromwandler (13) einem Wahlschalter (21) zur Umschaltung zwischen einem Widerstandswert von Null, einem mit dem Widerstandswert der Phasenleiter-Stromwandler übereinstimmenden Widerstandswert und einem im Vergleich zum Wert der Phasenleiter-Stromwandler doppelten Widerstandswert zugeordnet ist.

2. Elektronischer Auslöser nach Anspruch 1, dadurch gekennzeichnet, daß an die Klemmen des Neutralleiter-Stromwandlers (13) in Reihe geschaltete Widerstände (17, 18) angeschlossen sind, die jeweils mit den Widerständen (14, 16) der Phasenleiter-Stromwandler (10-12) identisch sind, und daß der Wahlschalter (21) drei Stellungen, und zwar eine Ausschaltstellung, eine zweite Stellung (25) zur Überbrückung eines (18) der beiden in Reihe geschalteten Widerstände (17, 18) sowie eine dritte Stellung (27) zur Überbrückung beider in Reihe geschalteten Widerstände (17, 18) aufweist.

3. Elektronischer Auslöser nach Anspruch 1 oder 2, dadurch gekennzeichnet, daß er einen austauschbaren Block (29) umfaßt, in den die Stromwandler (10-13), die genannten Widerstände (14-18) sowie der genannte Wahlschalter (21) integriert sind.

4. Elektronischer Auslöser nach Anspruch 3, dadurch gekennzeichnet, daß der genannte Wahlschalter (21) gegenüber dem Pol für den Schutz des Neutralleiters (N) angeordnet ist.

5. Elektronischer Auslöser nach Anspruch 3 oder 4, dadurch gekennzeichnet, daß der genannte Wahlschalter (21) eine an der Außenseite des genannten Blocks (29) angeordnete Schaltstellungsanzeige (30) aufweist.

## Claims

1. An electronic trip device for a multipole low voltage circuit breaker, comprising current measuring transformers (10-13) connected on phase (1, 2, 3) and neutral (N) conductors of the power system protected by the circuit breaker, a resistance (14-18) connected to the terminals of each transformer to generate a voltage signal proportional to the current in the associated conductor, a processing unit (19) of said signals, which sends a tripping order to the circuit breaker when said signals exceed preset thresholds, characterized in that the measuring transformers (10-13) are all identical, that the resistances (14-16) associated to the phase conductor transformers (10-12) are all identical and that the neutral conductor transformer (13) is associated to a selector switch (21) with zero resistance, a resistance equal to that of the phase transformers or a resistance twice that of the phase transformers.

2. The electronic trip device according to claim 1, characterized in that resistances (17, 18) are connected in series to the terminals of the neutral transformer (13) each resistance being identical to the resistances (14-16) of the phase transformers (10-12), and that the selector switch (21) presents three positions, a first open position, a second position (25) shunting one (18) of the two series-connected resistances (17, 18), and a third position (27) shunting both the series-connected resistances.

3. The electronic trip device according to claim 1 or 2, characterized in that it comprises an interchangeable block (29), in which the current transformers (10-13), said resistances (14-18) and said selector switch (21) are incorporated.

4. The electronic trip device according to claim 3, characterized in that said selector switch (21) is located in front of the pole protecting the neutral conductor (N).

5. The electronic trip device according to claim 3 or 4, characterized in that said selector switch (21) comprises a position indicator (30) on the outside of said block (29).
